(19) 

**Europäisches Patentamt**

**European Patent Office**

**Office européen des brevets**

(11) **EP 4 622 151 A1**

(12) **EUROPEAN PATENT APPLICATION**
published in accordance with Art. 153(4) EPC

(43) Date of publication:
**24.09.2025  Bulletin 2025/39**

(21) Application number: **23910044.9**

(22) Date of filing: **08.12.2023**

(51) International Patent Classification (IPC):
*H04L 1/1806* (2023.01)

(52) Cooperative Patent Classification (CPC):
**H04L 1/1806; H04L 1/1812; H04W 80/06**

(86) International application number:
**PCT/CN2023/137427**

(87) International publication number:
**WO 2024/140114 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022  CN 202211718686**

(71) Applicant: **Huawei Technologies Co., Ltd.
Shenzhen, Guangdong 518129 (CN)**

(72) Inventors:
• **CHEN, Erkai
  Shenzhen, Guangdong 518129 (CN)**
• **XU, Rui
  Shenzhen, Guangdong 518129 (CN)**
• **QIN, Yi
  Shenzhen, Guangdong 518129 (CN)**
• **LU, Yujiao
  Shenzhen, Guangdong 518129 (CN)**

(74) Representative: **Grünecker Patent- und
Rechtsanwälte
PartG mbB
Leopoldstraße 4
80802 München (DE)**

(54) **METHOD FOR DETERMINING HARQ PROCESS NUMBER, AND RELATED APPARATUS**

(57)     A HARQ process number determining method and a related apparatus are provided. The method includes: obtaining a first hybrid automatic repeat request HARQ process number corresponding to a first configured grant CG physical uplink shared channel PUSCH; determining, based on the first HARQ process number, a second HARQ process number corresponding to a second CG PUSCH; and transmitting data on a first PUSCH corresponding to the first HARQ process number and a second PUSCH corresponding to the second HARQ process number. In the method, based on a HARQ process number of a CG PUSCH, a HARQ process number of another CG PUSCH may be determined, so that HARQ process numbers of adjacent CG PUSCHs used for transmitting data are different. This helps ensure that retransmission scheduling based on a HARQ process number can be performed smoothly.

_500_

| Terminal device | | Access network device |
|---|---|---|

510: Obtain a first HARQ process number corresponding to a first CG PUSCH

530: Obtain a first HARQ process number corresponding to a first CG PUSCH

520: Determine, based on the first HARQ process number, a second HARQ process number corresponding to a second CG PUSCH

540: Determine, based on the first HARQ process number, a second HARQ process number corresponding to a second CG PUSCH

550: Transmit data on a first PUSCH corresponding to the first HARQ process number and a second PUSCH corresponding to the second HARQ process number

FIG. 5

EP 4 622 151 A1

**Description**

This application claims priority to Chinese Patent Application No. 202211718686.9, filed with the China National Intellectual Property Administration on December 29, 2022 and entitled "HARQ PROCESS NUMBER DETERMINING METHOD AND RELATED APPARATUS", which is incorporated herein by reference in its entirety.

**TECHNICAL FIELD**

This application relates to the communication field, and in particular, to a HARQ process number determining method and a related apparatus.

**BACKGROUND**

At present, in some low-latency services, such as an extended reality (extended reality, XR) service, an access network device may preconfigure configured grant (configured grant, CG) parameters for a terminal device, and the terminal device may transmit data based on an uplink transmission resource corresponding to the CG parameters. For example, a transmission resource related to a set of CG parameters may include one or more CG periods, and one CG period includes one physical uplink shared channel (physical uplink shared channel, PUSCH). When the terminal device needs to send uplink data, the terminal device uses a configured PUSCH for uplink transmission. In this way, the terminal device does not need to send a resource scheduling request to a network device each time the terminal device is to perform uplink transmission. This can reduce overheads caused by scheduling, and decrease a transmission latency.

If the access network device does not successfully receive the uplink data from the terminal device, the access network device may schedule the terminal device for retransmission. In a possible implementation, the access network device and the terminal device calculate, based on the CG parameters, a hybrid automatic repeat request (hybrid automatic repeat request, HARQ) process number corresponding to the PUSCH. When performing retransmission scheduling, the access network device may indicate, to the terminal device by using the HARQ process number, data carried on a PUSCH that needs to be retransmitted. This helps the terminal device perform retransmission and the network device combine the initially transmitted data and the retransmitted data.

However, with an increase in an amount of uplink data to be transmitted, configuring one PUSCH in one CG period cannot meet a service requirement. Currently, it is proposed in an existing solution that a plurality of PUSCHs are configured in one CG period. In this case, HARQ process numbers that correspond to adjacent PUSCHs and that are calculated based on CG parameters may be the same. This is unfavorable to retransmission scheduling by an access network device.

**SUMMARY**

This application provides a communication method and a related apparatus, to determine, based on a HARQ process number of a CG PUSCH, a HARQ process number of another CG PUSCH, and transmit data on these CG PUSCHs.

According to a first aspect, this application provides a communication method. The method may be applied to an access network device such as a base station or an access point, or may be applied to a terminal device. The method may be performed by the access network device or the terminal device, or may be performed by a component (for example, a chip, a chip system, or a processor) configured in the access network device or the terminal device, or may be implemented by a logical node, a logical module, or software that can implement all or some functions of the access network device or the terminal device. This is not limited in this application.

The method includes: obtaining a first HARQ process number corresponding to a first CG PUSCH; determining, based on the first HARQ process number, a second HARQ process number corresponding to a second CG PUSCH; and transmitting data on a first PUSCH corresponding to the first HARQ process number and a second PUSCH corresponding to the second HARQ process number.

Data may be transmitted between the terminal device and the access network device based on a transmission resource preconfigured for the terminal by using a CG configuration. A CG configuration usually includes a set of CG parameters. For ease of description, a CG configuration is referred to as a CG for short, and a PUSCH of a CG configuration is referred to as a CG PUSCH in the following. When a data receiving error occurs, the access network device may schedule retransmission based on a HARQ process number of a CG PUSCH.

A HARQ process number of a CG PUSCH used for transmitting data may be determined based on a HARQ process number of a CG PUSCH used as a reference. For ease of description, the CG PUSCH used as the reference is referred to as a first CG PUSCH, and the HARQ process number thereof is referred to as a first HARQ process number. Another CG PUSCH whose HARQ process number is determined on this basis is referred to as a second CG PUSCH, and the HARQ process number thereof is referred to as a second HARQ process number.

The first HARQ process number may be determined by the terminal device and the access network device by using a same rule, or be determined by the access network device and sent to the terminal device, or be determined by the terminal device and reported to the access network device. Then, the access network device and the terminal device may determine the second HARQ process number based on the first HARQ process number by using a same rule. Data may be transmitted between the terminal device and the access network device based on CG PUSCHs whose HARQ process numbers are determined by using the foregoing method.

According to the foregoing technical content, a HARQ process number of each CG PUSCH may be determined, and HARQ process numbers of different CG PUSCHs may be different from each other. Therefore, HARQ process numbers of CG PUSCHs adjacent in time domain are also different. When scheduling retransmission due to a data receiving error, the access network device does not mistakenly identify, due to identical HARQ process numbers, a CG PUSCH on which data is located. This can ensure smooth retransmission, and ensure stability of data transmission.

With reference to the first aspect, in some possible implementations of the first aspect, the first CG PUSCH and the second CG PUSCH are in a same CG period.

The second CG PUSCH and the first CG PUSCH may be PUSCHs in the same CG period. In other words, when a plurality of PUSCHs are in a CG period, based on a HARQ process number of a first CG PUSCH, a HARQ process number of another PUSCH in the CG period may be determined.

In this way, when the plurality of PUSCHs are included in the CG period, HARQ process numbers of these PUSCHs may be different. When scheduling retransmission based on a HARQ process number due to a data receiving error, the access network device does not confuse the PUSCHs in the same CG period, thereby ensuring smooth retransmission.

Optionally, the first CG PUSCH may be a 1st PUSCH in the CG period in which the first CG PUSCH is located.

With reference to the first aspect, in some possible implementations of the first aspect, the first CG PUSCH and the second CG PUSCH are in different CG periods of a first CG.

The first CG PUSCH and the second CG PUSCH may be PUSCHs in different CG periods of a same CG, and the CG corresponding to the first CG PUSCH and the second CG PUSCH is referred to as the first CG. In other words, based on a HARQ process number of a PUSCH in a CG period of the first CG, a HARQ process number of a PUSCH in another CG period of the first CG may be determined.

In this way, based on a HARQ process number, a HARQ process number of another PUSCH of a same CG may be obtained. HARQ process numbers of PUSCHs that are of the same CG and that are adjacent in time domain may be different. When retransmission is scheduled based on a HARQ process number, the PUSCHs that are of the same CG and that are adjacent in time domain are not confused.

Optionally, the first CG PUSCH may be a 1st PUSCH of the CG corresponding to the first CG PUSCH in time domain.

With reference to the first aspect, in some possible implementations of the first aspect, the first CG PUSCH is in a CG period of a second CG, and the second CG PUSCH is in a CG period of a third CG.

The first CG PUSCH and the second CG PUSCH may be PUSCHs of different CGs. A CG corresponding to the first CG PUSCH is referred to as the second CG, and a CG corresponding to the second CG PUSCH is referred to as the third CG. A HARQ process number of a PUSCH of the third CG may be determined based on a HARQ process number of a PUSCH of the second CG. In other words, when there are a plurality of CGs, based on a HARQ process number of a PUSCH of one of the CGs, a HARQ process number of a PUSCH of one or more other CGs may be determined.

In this way, a HARQ process number of a PUSCH of a CG may be determined based on a HARQ process number of a PUSCH of another CG. HARQ process numbers of PUSCHs of different CGs may be different. When there are a plurality of CGs, confusion caused by identical HARQ process numbers of different PUSCHs can also be prevented, ensuring smooth retransmission scheduling.

In a possible implementation, an offset value between the second HARQ process number and the first HARQ process number is predefined, that is, the predefined offset value may be added to the first HARQ process number, to obtain the second HARQ process number.

In a possible implementation, an offset value between the second HARQ process number and the first HARQ process number is configured by the access network device, that is, CG parameters configured by the access network device may include the offset value between the second HARQ process number and the first HARQ process number. When the second HARQ process number is determined based on the first HARQ process number, the second HARQ process number may be obtained by adding the offset value to the first HARQ process number.

In a possible implementation, the second HARQ process number X2 and the first HARQ process number X1 may satisfy the following formula:

$$X2 = (X1 + (L2 - L1) \times M) \bmod N,$$

where

L2 represents an index of the second CG PUSCH, L1 represents an index of the first CG PUSCH, M represents a non-zero integer, and N represents a quantity of HARQ processes. M and N may be CG parameters configured by the access network device.

When HARQ process numbers of a plurality of CG PUSCHs are determined based on the first HARQ process number, the HARQ process numbers of the CG PUSCHs are related to indexes of the CG PUSCHs, so that HARQ process numbers of CG PUSCHs adjacent in time domain may be different. Thus, smooth retransmission scheduling can be ensured.

In a possible implementation, the second HARQ process number X2 and the first HARQ process number X1 may satisfy the following formula:

$$X2 = (X1 + (L2 - L1) \times M) \bmod N + O,$$

where

L2 represents an index of the second CG PUSCH, L1 represents an index of the first CG PUSCH, M represents a non-zero integer, N represents a quantity of HARQ processes, and O represents an integer greater than or equal to 0. M, N, and O may be CG parameters configured by the access network device.

When a HARQ process number of another CG PUSCH is determined based on the first HARQ process number, a CG-related offset value O may be further added. Thus, when there are a plurality of CGs, HARQ process numbers of PUSCHs of different CGs may be different. This can prevent confusion, and ensure smooth retransmission scheduling.

According to the foregoing technical content, based on a HARQ process number of a CG PUSCH, a HARQ process number of another CG PUSCH may be determined; and HARQ process numbers corresponding to different CG PUSCHs adjacent in time domain may be different. Therefore, when scheduling retransmission due to a data receiving error, the access network device does not mistakenly identify, due to identical HARQ process numbers, a CG PUSCH on which data is located. This can ensure smooth retransmission, and ensure stability of data transmission.

According to a second aspect, this application provides a communication apparatus, including a module or a unit configured to implement the method according to any one of the first aspect or the possible implementations of the first aspect. The unit or the module included in the apparatus may be implemented by software and/or hardware. For example, the apparatus may be an access network device or a terminal device, or may be a chip, a chip system, a processor, or the like that supports an access network device or a terminal device in implementing the foregoing method, or may be a logical node, a logical module, or software that can implement all or some functions of an access network device or a terminal device.

According to a third aspect, this application provides a communication apparatus, including a processor. The processor is configured to perform the communication method according to any one of the first aspect or the possible implementations of the first aspect.

The apparatus may further include a memory, configured to store instructions and data. The memory is coupled to the processor. When the processor executes the instructions stored in the memory, the method described in the foregoing aspects may be implemented. The apparatus may further include a communication interface. The communication interface is used by the apparatus to communicate with another device. For example, the communication interface may be a transceiver, a circuit, a bus, a module, or another type of communication interface.

According to a fourth aspect, this application provides a chip system. The chip system includes at least one processor, configured to support implementation of a function according to any one of the first aspect or the possible implementations of the first aspect, for example, receiving or processing data and/or information in the foregoing method.

In a possible design, the chip system further includes a memory, the memory is configured to store program instructions and data, and the memory is located inside or outside the processor.

The chip system may include a chip, or may include a chip and another discrete component.

According to a fifth aspect, this application provides a computer-readable storage medium, including a computer program. When the computer program is run, the method according to any one of the first aspect or the possible implementations of the first aspect is implemented.

According to a sixth aspect, this application provides a computer program product. The computer program product includes a computer program (which may also be referred to as code or instructions). When the computer program is run, the method according to any one of the first aspect or the possible implementations of the first aspect is performed.

According to a seventh aspect, an embodiment of this application provides a communication system, including the foregoing access network device and terminal device.

It should be understood that the second aspect to the seventh aspect of this application correspond to the technical solutions of the first aspect of this application, and beneficial effects achieved by the aspects and the corresponding feasible implementations are similar. Details are not described again.

**BRIEF DESCRIPTION OF DRAWINGS**

FIG. 1 is a diagram of a communication system applicable to a method according to an embodiment of this application;
FIG. 2 is a diagram of a time domain resource of a CG;
FIG. 3 is a diagram of a time domain resource position of a PUSCH;
FIG. 4 is a diagram of three PUSCHs being configured in one CG period;
FIG. 5 is a schematic flowchart of a communication method according to an embodiment of this application;
FIG. 6 is a diagram of a first CG PUSCH and a second CG PUSCH being PUSCHs in a same CG period;
FIG. 7 is a diagram of a first CG PUSCH and a second CH PUSCH being PUSCHs in different CG periods of a same CG;
FIG. 8 is a diagram of a first CG PUSCH and a second CG PUSCH being PUSCHs in CG periods of different CGs;
FIG. 9 is a block diagram of a communication apparatus according to an embodiment of this application; and
FIG. 10 is another block diagram of a communication apparatus according to an embodiment of this application.

**DESCRIPTION OF EMBODIMENTS**

The following describes technical solutions of this application with reference to accompanying drawings.

A communication system applicable to a communication method provided in this application is first described with reference to an accompanying drawing.

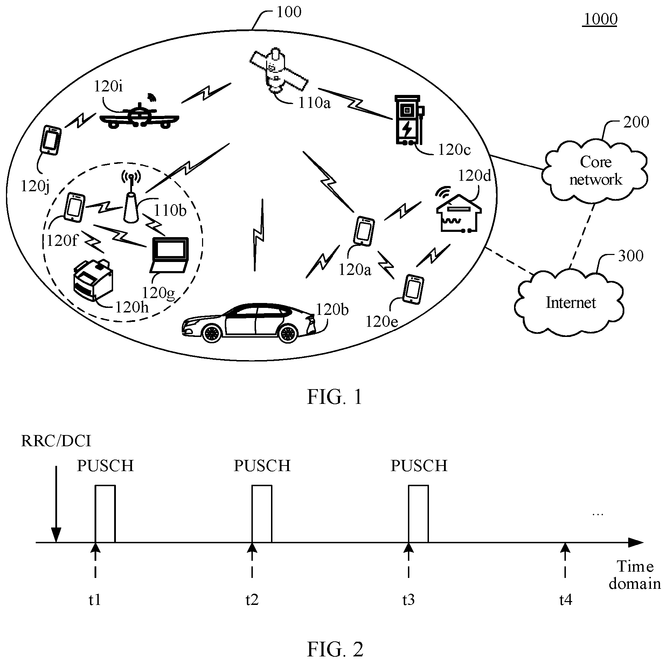

FIG. 1 is a diagram of a communication system applicable to a method according to an embodiment of this application. As shown in FIG. 1, the communication system 1000 includes a radio access network (radio access network, RAN) 100 and a core network (core network, CN) 200. The RAN 100 includes at least one RAN node (for example, a 110a and a 110b in FIG. 1, which are collectively referred to as 110) and at least one terminal (for example, a 120a to a 120j in FIG. 1, which are collectively referred to as 120). The RAN 100 may further include another RAN node, for example, a wireless relay device and/or a wireless backhaul device (not shown in FIG. 1). A terminal 120 is connected to a RAN node 110 in a wireless manner. The RAN node 110 is connected to the core network 200 and/or an Internet 300 in a wireless or wired manner. A core network device in the core network 200 and the RAN node 110 in the RAN 100 may be different physical devices, or may be a same physical device that integrates a logical function of a core network and a logical function of a radio access network.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may sometimes also be referred to as an access network device, a RAN entity, an access node, or the like, is part of a communication system, and is configured to help a terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and the network element 120i may be configured as a mobile base station. For the terminal 120j that is connected to the RAN 100 by using the network element 120i, the network element 120i is a base station. However, for the base station 110a, the network element 120i is a terminal. The RAN node 110 and the terminal 120 are sometimes both referred to as communication apparatuses. For example, in FIG. 1, the network elements 110a and 110b may be understood as communication apparatuses that have a function of a base station, and the network elements 120a to 120j may be understood as communication apparatuses that have a function of a terminal.

In a possible scenario, a RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, the 110a in FIG. 1), a micro base station or an indoor station (for example, the 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node in this application may alternatively be implemented by using a software function running on hardware, or be implemented by using a virtualization function instantiated on a platform (for example, a cloud platform). The RAN node in this application may alternatively be a logical node, a logical module, or software that can implement all or some functions of the RAN node.

In another possible scenario, a plurality of RAN nodes collaborate to assist a terminal in implementing radio access, and different RAN nodes separately implement some functions of a base station. For example, a RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, be included in a remote radio unit (remote radio unit, RRU), an active antenna unit (active antenna unit, AAU), or a remote radio head (remote radio head, RRH).

It can be understood that the RAN node may also be referred to by different names, for example, an access network device. In this application, an access network device is used for description in the following unless otherwise specified.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination thereof.

A terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), Internet of things (Internet of things, IoT), virtual reality, augmented reality, industrial control, automated driving, telemedicine, a smart grid, smart furniture, a smart office, smart wearable, intelligent transportation, and a smart city. The terminal device may be a mobile phone, a tablet computer, a computer with a wireless transceiving function, a wearable device, a vehicle, an uncrewed aerial vehicle, a helicopter, an airplane, a ship, a robot, a robot arm, a smart home device, or the like. A device form of the terminal device is not limited in embodiments of this application.

In embodiments of this application, data can be transmitted between the access network device and the terminal device. For example, the terminal device may send data or information to the access network device, and/or receive data or information from the access network device; and the access network device may also send data or information to the terminal device, and/or receive data or information from the terminal device. "Sending the information to the terminal device" may be understood as a destination end of the information being the terminal device, and may include directly or indirectly sending the information to the terminal device. "Receiving the information from the terminal device" may be understood as a source end of the information being the terminal device, and may include directly or indirectly receiving the information from the terminal device. Necessary processing, such as a format change, may be performed on the information between the source end and the destination end of information sending. However, the destination end can understand valid information from the source end. Similar descriptions in this application may be understood similarly, and details are not described herein again.

For ease of understanding of embodiments of this application, the following briefly describes several terms used in this application.

    1. Licensed band: The licensed band is frequency domain resources that can be used only after being licensed by regulatory authorities of the communication industry.

    2. HARQ process number (HARQ process number): The HARQ process number, also referred to as a HARQ process identifier (HARQ process ID), indicates a HARQ process. One HARQ process number indicates one HARQ process, and different HARQ processes may be distinguished by using HARQ process numbers.

The HARQ process is a data transmission process using a HARQ technology. In long term evolution (long term evolution, LTE) and new radio (new radio, NR) systems, the HARQ technology is used during data transmission to improve data transmission reliability. In the HARQ technology, a receive end of data checks, by using a cyclic redundancy check (cyclic redundancy check, CRC), whether a received data packet is erroneous. After receiving an erroneous data packet, the receive end retains the data packet, and sends a retransmission request to a transmit end of the data. After the transmit end sends a data packet again, the receive end combines the erroneous data packet and the retransmitted data packet for decoding, thereby improving a decoding success rate. For a HARQ process, an independent HARQ buffer (buffer) exists at the receive end of data transmission, and is configured to store the erroneous data packet, so that the erroneous data packet is combined with the retransmitted data packet that is subsequently received.

Uplink transmission between a terminal device and an access network device is used as an example. A PUSCH used for transmitting uplink data corresponds to a HARQ process number, which uniquely specifies a HARQ process. When data received by the access network device is erroneous and retransmission is scheduled, the access network device may indicate, to the terminal device by using the HARQ process number, data carried on a PUSCH that is erroneous and needs to be retransmitted. This helps the terminal device retransmit the corresponding data. The terminal device may perform retransmission by using PUSCHs with a same HARQ process number. In this way, the access network device may combine data stored in a corresponding HARQ buffer with retransmitted data. This process is referred to as soft combining.

3. CG and CG period: The CG, also referred to as scheduling-free, is a process in which an access network device preconfigures a periodic uplink transmission resource for a terminal device by using a CG configuration, and when the terminal device needs to transmit data, the terminal device autonomously performs transmission on the preconfigured or activated transmission resource. The CG configuration may be specifically an information element (information element) "CG configuration (ConfiguredGrantConfig)" carried in RRC signaling. One CG configuration usually includes one set of CG parameters. For ease of description, the CG configuration is referred to as a CG below. With the CG, the terminal device does not need to send a scheduling request each time uplink data is to be transmitted, and does not need to wait for a base station to permit uplink resource scheduling.

There are two types of CG: a type 1 (type 1) and a type 2 (type 2). For the type 1, the access network device uses the radio resource control (radio resource control, RRC) signaling to configure CG parameters, which are automatically activated and take effect after being configured. For the type 2, the access network device uses the RRC signaling to configure CG parameters, for which a corresponding uplink transmission resource needs to be activated by using downlink control information (downlink control information, DCI).

The CG parameters configured by the access network device may include duration of a CG periodicity (periodicity), a quantity of HARQ processes used by the CG (nrof HARQ-processes), an index (index) of the CG, another parameter related to a time domain or frequency domain resource, and the like. For example, refer to FIG. 2. A CG transmission resource shown in FIG. 2 may be obtained by using CG parameters. As shown in FIG. 2, duration of a CG periodicity is P=t2-t1, in a unit of slot; and one CG period includes one PUSCH, which corresponds to one HARQ process.

The access network device configures the CG parameters for the terminal device once. After the access network device activates, by using the RRC signaling or the DCI, the resource corresponding to the CG parameters, the terminal device periodically uses the resource corresponding to the same CG parameters to perform uplink transmission. In FIG. 2, a time t1 to a time t2 is one transmission period, a time t2 to a time t3 is one transmission period, a time t3 to a time t4 is one transmission period, and so on. In each transmission period, the terminal device may perform uplink transmission by using the resource corresponding to the same CG parameters.

For ease of description, a time period occupied by one transmission period for performing uplink transmission periodically by the terminal device based on the CG parameters is referred to as a CG period. For example, in FIG. 2, the time t1 to the time t2 is referred to as one CG period, and the time t2 to the time t3 is referred to as one CG period.

A PUSCH used for transmitting data may be obtained by using the CG, for example, "a first CG PUSCH" and "a second CG PUSCH" described below.

For ease of description, the PUSCH configured by the access network device for the terminal device by using the CG is referred to as a CG PUSCH in embodiments of this application.

In embodiments of this application, the access network device may configure at least one set of CG parameters for the terminal device. When a plurality of sets of CG parameters are configured, for ease of description, forms such as "a first CG" and "a second CG" are used to distinguish between CGs corresponding to different sets of CG parameters. Different CGs correspond to different CG indexes. In this application, a resource corresponding to a CG is a resource configured by using CG parameters of the CG.

In a licensed band, one PUSCH resource is usually configured in one CG period and used for data transmission. In CG-based transmission in the licensed band, a HARQ process number of a CG PUSCH is implicitly determined based on configured CG parameters. A HARQ process number X that corresponds to a CG PUSCH and that is defined in NR satisfies the following formula:

$$X = [\mathrm{floor}(S/P)] \bmod N \qquad\qquad \text{formula (1)}$$

Herein, S represents a number of a 1st symbol (current symbol) occupied by the CG PUSCH in time domain; P represents duration of a CG periodicity of a CG corresponding to the CG PUSCH, and is expressed as a quantity of symbols included in a CG period; N is a quantity of HARQ processes of the CG; floor( ) represents rounding down to a nearest integer; and mod represents a remainder operation. P and N are CG parameters configured by the access network device. S is related to a time domain resource position of the CG PUSCH, and S satisfies the following formula:

S = (SFN × numberOfSlotsPerFrame × numberOfSymbolsPerSlot + slot number in the frame × numberOfSymbolsPerSlot + symbol number in the slot) formula (2)      formula (2)

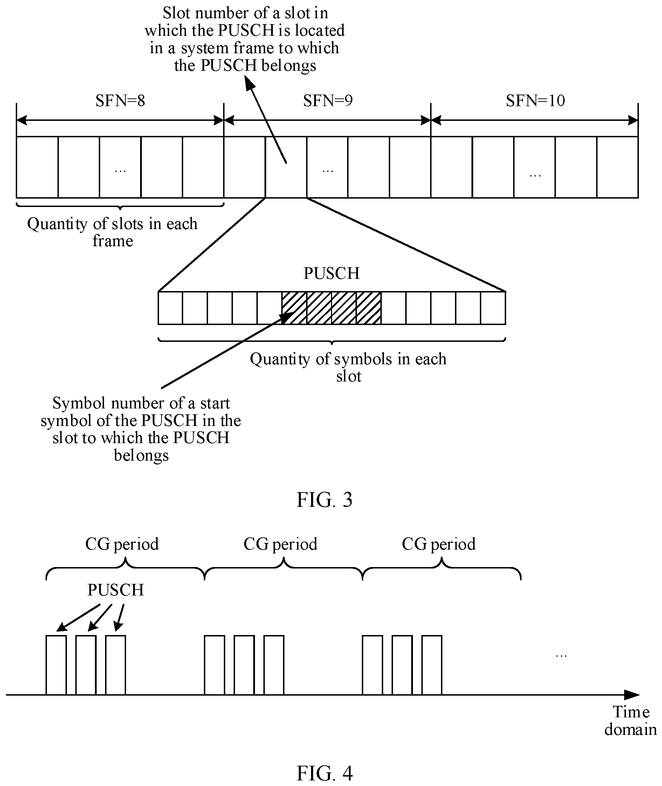

Herein, SFN represents a system frame number (system frame number, SFN) of the CG PUSCH, number-OfSlotsPerFrame represents a quantity of slots in each frame, numberOfSymbolsPerSlot represents a quantity of symbols in each slot, slot number in the frame represents a slot number of a slot in which the CG PUSCH is located in a system frame to which the CG PUSCH belongs, and symbol number in the slot represents a symbol number of a start symbol of the CG PUSCH in the slot to which the CG PUSCH belongs. FIG. 3 is a diagram of a time domain resource position of a PUSCH.

It should be understood that forms of the formulas used in embodiments of this application are merely examples provided for ease of understanding. Forms of the formulas may alternatively be forms obtained by performing any mathematical transformation on the formulas. This is not limited in this application.

When the access network device configures a plurality of sets of CG parameters for the terminal device, to prevent HARQ process numbers of CG PUSCHs corresponding to different sets of CG parameters from being the same, the formula (1) may further include a predefined or preconfigured offset value O, which may be, for example, a HARQ offset (harq-procID-offset2) in the CG parameters configured by the access network device. In this case, a HARQ process number X corresponding to a CG PUSCH may satisfy the following formula:

$$X = [floor(S/P)] \bmod N + O \qquad\qquad \text{formula (3)}$$

The parameters in the formula (3) correspond to the parameters in the formula (1).

With emergence of dynamic changing services with a large amount of data transmitted, such as an XR service, configuring only one PUSCH in a CG period cannot meet a data transmission requirement, and a plurality of PUSCHs need to be configured in a period. FIG. 4 shows an example. FIG. 4 shows a case in which three PUSCHs are configured in a CG period. It should be understood that the quantity of PUSCHs in FIG. 4 is merely an example, and cannot be a limitation on this application.

For adjacent PUSCHs configured in one CG period, HARQ process numbers calculated by using the formula (1) or (3) may be the same because time domain resources of the PUSCHs are close. If HARQ process numbers of two adjacent PUSCHs in a CG period are the same, when the access network device schedules retransmission due to a receiving failure, a PUSCH on which retransmission is required cannot be determined by using the HARQ process numbers. This increases processing difficulty for the access network device.

Therefore, how to determine HARQ process numbers for the CG PUSCHs to ensure CG uplink data transmission has become an urgent problem to be resolved.

In view of this, this application provides a communication method. Based on a HARQ process number of a CG PUSCH (for example, a first CG PUSCH in the following), a HARQ process number of another CG PUSCH (for example, a second CG PUSCH in the following) is determined. Data is transmitted on PUSCHs corresponding to these HARQ process numbers. In this way, HARQ process numbers of CG PUSCHs adjacent in time domain are different. When scheduling retransmission due to a data receiving error, an access network device does not mistakenly identify, due to identical HARQ process numbers, a CG PUSCH on which data is located. This can ensure smooth retransmission, and ensure stability of data transmission.

With reference to accompanying drawings, the following describes in detail the method provided in this application.

For ease of understanding, the following several points are first described.

First, to clearly describe the technical solutions in embodiments of this application, terms such as "first" and "second" are used in embodiments of this application to distinguish between identical items or similar items that have basically same functions and purposes. For example, the first CG PUSCH and the second CG PUSCH are merely used to distinguish between different CG PUSCHs, and do not constitute a limitation on a sequence of the CG PUSCHs in time domain. A person skilled in the art may understand that the terms such as "first" and "second" do not limit a quantity or a sequence, and the terms such as "first" and "second" do not indicate a definite difference, either.

Second, in embodiments of this application, terms and English acronyms and abbreviations, such as HARQ, HARQ process number, CG, CG configuration, CG parameter, and CG period, are all examples provided for ease of description, and shall not constitute any limitation on this application. This application does not exclude a possibility of defining another term that can implement a same or similar function in an existing or future protocol.

Third, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be singular or plural.

Fourth, "predefinition" or "preconfiguration" may be implemented by pre-storing corresponding code or a corresponding table in a device (for example, including a terminal device or an access network device) or in another manner that may be used to indicate related information. A specific implementation of "predefinition" or "preconfiguration" is not limited in this application. "Storing" may be storing in one or more memories. The one or more memories may be separately disposed, or may be integrated into an encoder, a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fifth, in embodiments of this application, descriptions such as "when", "in a case of", and "if" all mean that a device (for example, a terminal device or an access network device described below) performs corresponding processing in a specific objective situation, and are not intended to limit time. In addition, the device (for example, the terminal device or the access network device described below) is not required to necessarily perform a determining action during implementation. This does not mean that there is another limitation.

With reference to the accompanying drawings, the following describes in detail the communication method provided in this application.

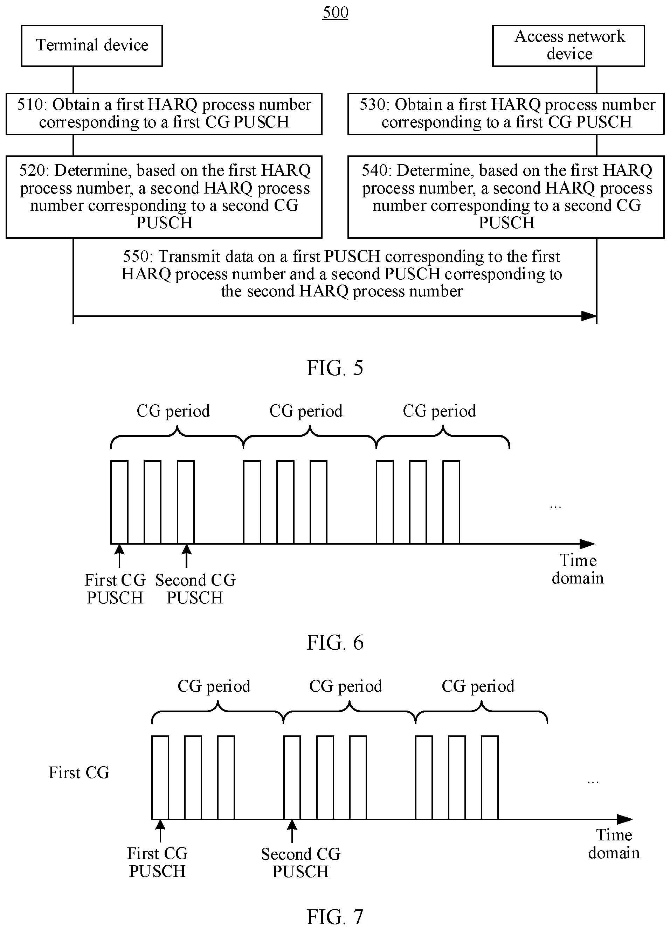

FIG. 5 is a schematic flowchart of a communication method according to an embodiment of this application. FIG. 5 describes the method by using interaction between a terminal device and an access network device as an example. For example, steps of the terminal device shown in FIG. 5 may be performed by the terminal device, or may be performed by a chip, a chip system, or a processor that supports the terminal device in implementing the method, or may be implemented by a logical node, a logical module, or software that can implement all or some functions of the terminal device; and steps of the access network device shown in FIG. 5 may be performed by the access network device, or may be performed by a chip, a chip system, or a processor that supports the access network device in implementing the method, or may be implemented by a logical node, a logical module, or software that can implement all or some functions of the access network device.

The method 500 shown in FIG. 5 may include the following steps.

Step 510: A terminal device obtains a first HARQ process number corresponding to a first CG PUSCH.

Step 520: The terminal device determines, based on the first HARQ process number, a second HARQ process number corresponding to a second CG PUSCH.

Step 530: An access network device obtains the first HARQ process number corresponding to the first CG PUSCH.

Step 540: The access network device determines, based on the first HARQ process number, the second HARQ process number corresponding to the second CG PUSCH.

Step 550: The terminal device and the access network device transmit data on a first PUSCH corresponding to the first HARQ process number and a second PUSCH corresponding to the second HARQ process number.

The first CG PUSCH and the second CG PUSCH are two different PUSCHs, corresponding to different HARQ process numbers. A HARQ process number corresponding to the first CG PUSCH is denoted as the first HARQ process number, and a HARQ process number corresponding to the second CG PUSCH is denoted as the second HARQ process number.

In a possible case, the first CG PUSCH and the second CG PUSCH are PUSCHs in a same CG period. FIG. 6 shows an example.

Referring to FIG. 6, a plurality of PUSCHs may be configured in a CG period of a CG, and a second CG PUSCH may be any other PUSCH in a CG period in which a first CG PUSCH is located. A HARQ process number of another PUSCH in the same period may be determined based on a first HARQ process number.

When a plurality of PUSCHs are configured in a CG period, a first HARQ process number may be determined for the CG period. In other words, there may be a first CG PUSCH in each of a plurality of CG periods of a CG. A HARQ process number of another PUSCH in the same CG period may be determined based on the first CG PUSCH.

For example, the first CG PUSCH may be a 1st PUSCH in the CG period, or may be a PUSCH at another time domain position in the CG period. This is not limited in this application.

In another possible case, the first CG PUSCH and the second CH PUSCH are PUSCHs in different CG periods of a same CG. FIG. 7 shows an example. For ease of description, the first CG PUSCH and the second CG PUSCH are denoted as PUSCHs of a first CG.

One or more PUSCHs may be configured in a CG period of the first CG. A CG period in which the second CG PUSCH is located may be different from a CG period in which the first CG PUSCH is located. The second CG PUSCH may be any other PUSCH that is of the first CG and that is in a different CG period from the first CG PUSCH. FIG. 7 schematically shows a case in which a first CG PUSCH is a 1st PUSCH that is of a first CG and that is activated and takes effect in time domain. It should be understood that this cannot be a limitation on this application. The first CG PUSCH may alternatively be another PUSCH of the first CG in time domain.

One first HARQ process number may be determined for one CG, that is, one CG has one first CG PUSCH.

Regardless of whether another PUSCH of the one CG is in a same CG period as the first CG PUSCH, a HARQ process number of the another PUSCH may be determined based on the first HARQ process number.

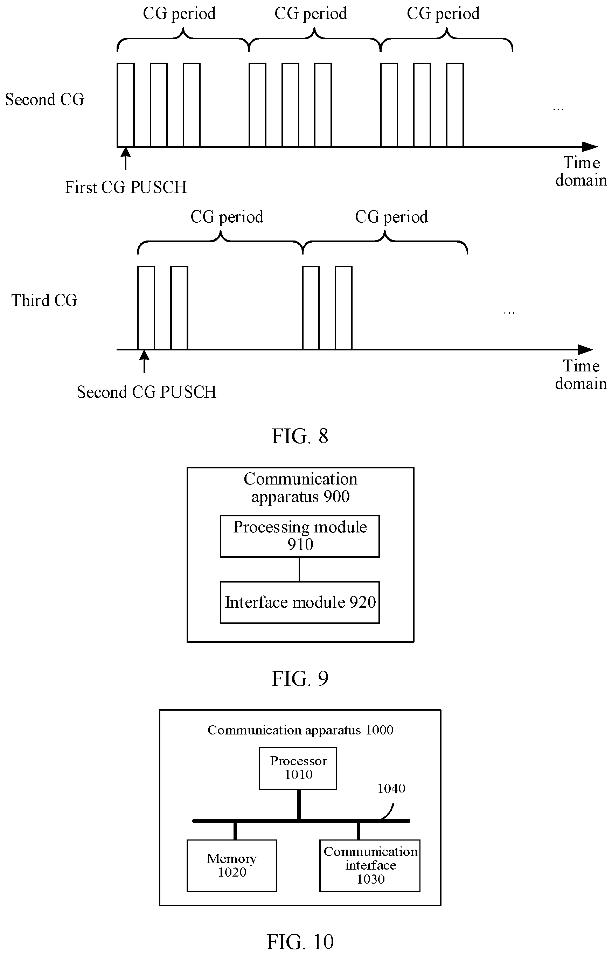

In still another possible case, the first CG PUSCH and the second CG PUSCH are PUSCHs in CG periods of different CGs. FIG. 8 shows an example. For ease of differentiation and description, the first CG PUSCH is denoted as a PUSCH in a CG period of a second CG, and the second CG PUSCH is denoted as a PUSCH in a CG period of a third CG.

It should be understood that FIG. 8 is merely an example. One or more PUSCHs may be configured in a CG period of the second CG, and the first CG PUSCH may be any PUSCH of the second CG in time domain. One or more PUSCHs may also be configured in a CG period of the third CG, and the second CG PUSCH may be any PUSCH of the third CG in time domain.

When a plurality of CGs are configured, a common first HARQ process number may be determined for the plurality of CGs, that is, the plurality of CGs have a common first CG PUSCH. Regardless of whether another PUSCH of the plurality of CGs is in a same CG as the first CG PUSCH, a HARQ process number of the another PUSCH may be determined based on the first HARQ process number.

In this embodiment of this application, communication devices (including the access network device and the terminal device) may use the first HARQ process number of the first CG PUSCH as a reference, and based on this, determine a HARQ process number of another CG PUSCH, for example, the second HARQ process number of the second CG PUSCH.

Based on the foregoing content, the HARQ process numbers of the first CG PUSCH and the second CG PUSCH that are used to transmit data between the terminal device and the access network device may be different. When scheduling retransmission due to a data receiving error, the access network device does not mistakenly identify, due to identical HARQ process numbers of CG PUSCHs adjacent in time domain, a CG PUSCH on which data is located. This can ensure smooth retransmission, and ensure stability of data transmission.

The following describes the steps in FIG. 5 in detail.

In step 510 and step 530, the first HARQ process number may be separately determined by the terminal device and the access network device, or may be determined by one of the terminal device and the access network device and then notified to the other.

In an example, step 510 includes determining, by the terminal device, the first HARQ process number corresponding to the first CG PUSCH, and step 530 includes determining, by the access network device, the first HARQ process number corresponding to the first CG PUSCH.

In other words, the terminal device and the access network device may separately determine the first HARQ process number corresponding to the first CG PUSCH. The two parties may determine the first HARQ process number based on a same rule, so that the terminal device and the access network device transmit uplink data on a same PUSCH based on a same HARQ process number.

When the terminal device and the access network device separately determine the first HARQ process number, a sequence of performing step 510 and step 530 is not limited. For example, step 510 may be performed and then step 530 may be performed, or step 530 may be performed and then step 510 may be performed, or step 510 and step 530 may be performed simultaneously.

In another example, step 530 includes determining, by the access network device, the first HARQ process number corresponding to the first CG PUSCH, and step 510 includes receiving, by the terminal device from the access network device, the first HARQ process number corresponding to the first CG PUSCH.

In other words, after determining the first HARQ process number, the access network device notifies the terminal device of the first HARQ process number, for example, configures the first HARQ process number for the terminal device by using RRC layer signaling, so that the terminal device and the access network device transmit uplink data on a same PUSCH based on a same HARQ process number.

In still another example, step 510 includes determining, by the terminal device, the first HARQ process number corresponding to the first CG PUSCH, and step 530 includes receiving, by the access network device from the terminal device, the first HARQ process number corresponding to the first CG PUSCH.

In other words, after determining the first HARQ process number, the terminal device notifies the access network device of the first HARQ process number, for example, sends the first HARQ process number to the access network device by using CG-uplink control information (uplink control information, UCI), so that the terminal device and the access network device transmit uplink data on a same PUSCH based on a same HARQ process number.

In a possible implementation, the first HARQ process number corresponding to the first CG PUSCH may be determined based on a time domain position of the first CG PUSCH.

In an example, the first HARQ process number may satisfy the formula (1).

Optionally, if CG parameters of a CG corresponding to the first CG PUSCH further include a HARQ offset, the first HARQ process number may satisfy the formula (3).

For example, one CG period of the CG corresponding to the first CG PUSCH includes 28 symbols, a quantity of used HARQ processes is 8, a quantity of slots in each frame is 10, a quantity of symbols in each slot is 14, a system frame number of the first CG PUSCH is 0, a slot number of a slot in which the first CG PUSCH is located in a frame is 0, and a symbol number of a start symbol of the first CG PUSCH in the slot to which the first CG PUSCH belongs is 3, that is, values of the parameters in the formula (1) are as follows:

$$P = 28;$$

$$N = 8;$$

and

S = (SFN $\times$ numberOfSlotsPerFrame $\times$ numberOfSymbolsPerSlot + slot number in the frame $\times$ numberOfSymbolsPerSlot + symbol number in the slot) = 0 $\times$ 10 $\times$ 14 + 0 $\times$ 14 + 3 = 3.

In this case, the first HARQ process number is X = [floor(S/P)] mod N = [floor(3/28)] mod 8 = 0.
If the CG parameters corresponding to the CG further include the HARQ offset O = 8, the first HARQ process number is X = [floor(S/P)] mod N +O = [floor(3/28)] mod 8 + 8 = 8.
In another example, the first HARQ process number X may satisfy the following formula:

$$X = [\text{floor(S/P)} \times \text{numberOfPUSCHPerPeriod}] \bmod N \qquad \text{formula (4)}$$

Herein, numberOfPUSCHPerPeriod represents a quantity of PUSCHs in one CG period, and the other parameters in the formula (4) correspond to the parameters in the formula (1).
Optionally, if CG parameters of a CG corresponding to the first CG PUSCH further include a HARQ offset O, the first HARQ process number may satisfy the foregoing formula:

$$X = [\text{floor(S/P)} \times \text{numberOfPUSCHPerPeriod}] \bmod N + O \qquad \text{formula (5)}$$

The parameters in the formula (5) correspond to the parameters in the formula (4).
For example, a quantity of HARQ processes of the CG corresponding to the first CG PUSCH is 8, a CG period includes 28 symbols, a quantity of PUSCHs in a CG period is 4, a quantity of slots in each frame is 10, a quantity of symbols in each slot is 14, a system frame number of the first CG PUSCH is 0, a slot number of a slot in which the first CG PUSCH is located in a frame is 0, and a symbol number of a start symbol of the first CG PUSCH in the slot to which the first CG PUSCH belongs is 3, that is, values of the parameters in the formula (4) are as follows:

$$P = 28;$$

$$N = 8;$$

$$\text{numberOfPUSCHPerPeriod} = 4;$$

and

S = (SFN $\times$ numberOfSlotsPerFrame $\times$ numberOfSymbolsPerSlot + slot number in the frame $\times$ numberOfSymbolsPerSlot + symbol number in the slot) = 0 $\times$ 10 $\times$ 14 + 0 $\times$ 14 + 3 = 3.

In this case, the first HARQ process number is X = [floor(S/P) $\times$ numberOfPUSCHPerPeriod] mod N = [floor(3/28) $\times$ 4] mod 8 = 0.
If the CG parameters corresponding to the CG further include the HARQ offset O = 8, the first HARQ process number is X = [floor(S/P) $\times$ numberOfPUSCHPerPeriod] mod N +O = [floor(3/28) $\times$ 4] mod 8 + 8 = 8.
For another example, a quantity of HARQ processes of the CG corresponding to the first CG PUSCH is 8, a CG period includes 28 symbols, a quantity of PUSCHs in a CG period is 4, a quantity of slots in each frame is 10, a quantity of symbols in each slot is 14, a system frame number of the first CG PUSCH is 0, a slot number of a slot in which the first CG PUSCH is located in a frame is 2, and a symbol number of a start symbol of the first CG PUSCH in the slot to which the first CG PUSCH belongs is 3, that is, values of the parameters in the formula (4) are as follows:

$$P = 28;$$

$$N = 8;$$

$$numberOfPUSCHPerPeriod = 4;$$

and

S = (SFN $\times$ numberOfSlotsPerFrame $\times$ numberOfSymbolsPerSlot + slot number in the frame $\times$ numberOfSymbolsPerSlot + symbol number in the slot) = $0 \times 10 \times 14 + 2 \times 14 + 3 = 31$.

In this case, the first HARQ process number is X = [floor(S/P) $\times$ numberOfPUSCHPerPeriod] mod N = [floor(31/28) $\times$ 4] mod 8 = 4.

If the CG parameters corresponding to the CG further include the HARQ offset O = 8, the first HARQ process number is X = [floor(S/P) $\times$ numberOfPUSCHPerPeriod] mod N +O = [floor(31/28)] mod 8 + 8 = 12.

In another possible implementation, the first HARQ process number is determined based on a preset range.

In an example, the preset range may be [0, N-1], where N is a quantity of HARQ processes of a CG corresponding to the first CG PUSCH. The first HARQ process number may be any integer in the range.

In another example, the preset range may be [O, O+N-1], where N is a quantity of HARQ processes of a CG corresponding to the first CG PUSCH, and O is a predefined or preconfigured offset value, for example, may be a HARQ offset in CG parameters.

When the access network device configures a plurality of CGs for the terminal device, HARQ process numbers of PUSCHs of the CGs may be determined separately. In other words, for each CG, a first HARQ process number corresponding to a first CG PUSCH may be obtained, and then a HARQ process number of a second CG PUSCH of the same CG is determined based on the first HARQ process number. A preset range used to determine a first HARQ process number of one CG may be [O, O+N-1]. Values of O corresponding to different CGs are different. This can prevent HARQ process numbers corresponding to PUSCHs of the different CGs from being the same.

For example, the access network device may configure two CGs, which are denoted as a CG 1 and a CG 2 for ease of differentiation and description. An offset value of the CG 1 may be configured as 0, and a first HARQ process number of the CG may be any integer in [0, N1-1], where N1 is a quantity of HARQ processes of the CG 1. An offset value of the CG 2 may be configured as N1, and a first HARQ process number of the CG may be any integer in [N1, N1+N2-1], where N2 is a quantity of HARQ processes of the CG 2.

In this way, when there are the plurality of CGs, it can be ensured that the first HARQ process numbers of the different CGs are different, thereby ensuring smooth retransmission scheduling.

It should be understood that a method for determining the first HARQ process number is not limited to the foregoing two implementations, and the first HARQ process number may alternatively be determined randomly. This is not limited in this application.

In step 520 and step 540, because both the terminal device and the access network device have obtained the first HARQ process number separately, the two parties may determine the second HARQ process number based on the first HARQ process number.

In an example, the second HARQ process number X2 and the first HARQ process number X1 may satisfy the following formula:

$$X2 = X1 + (L2 - L1) \times M \bmod N \qquad\qquad \text{formula (6)}$$

Herein, L2 represents an index of the second CG PUSCH, and L1 represents an index of the first CG PUSCH. For example, if a CG PUSCH is an L$^{th}$ PUSCH of a CG corresponding to the CG PUSCH, an index of the CG PUSCH is L. M represents a predefined non-zero integer, M may be a CG parameter of a CG, and M may be greater than or less than 0. N represents a quantity of HARQ processes of the CG. When the first CG PUSCH and the second CG PUSCH are PUSCHs of a same CG, for example, both are PUSCHs of the first CG, N represents a quantity of HARQ processes of the first CG.

In another example, the second HARQ process number X2 and the first HARQ process number X1 may alternatively satisfy the following formula:

$$X2 = (X1 + (L2 - L1) \times M) \bmod N + O \qquad\qquad \text{formula (7)}$$

Herein, O represents an integer greater than or equal to 0, and O may be a HARQ offset in CG parameters or may be a predefined value. The other parameters in the formula (7) correspond to those in the formula (6).

According to the foregoing method, based on a first HARQ process number corresponding to a first CG PUSCH, a HARQ process number of another CG PUSCH may be determined. For example, when HARQ process numbers of PUSCHs of a same CG are determined by using the formula (6), if M = 1, N = 8, a first HARQ process number X1 = 0, and a first CG PUSCH is a 1st PUSCH that is of the CG and that is activated in time domain, HARQ process numbers of subsequent PUSCHs of the CG may increase sequentially in chronological order.

When HARQ process numbers of a plurality of CG PUSCHs are determined based on the first HARQ process number, the HARQ process numbers of the CG PUSCHs are related to indexes of the CG PUSCHs, so that HARQ process numbers of CG PUSCHs adjacent in time domain may be different. When there are a plurality of CGs, offset values O related to the CGs may further be added, so that HARQ process numbers of PUSCHs of different CGs are different. In this way, confusion can be prevented during retransmission scheduling, ensuring smooth retransmission scheduling.

It should be understood that a sequence of performing step 520 and step 540 is not limited in this application. Step 520 may be performed and then step 540 may be performed, or step 540 may be performed and then step 520 may be performed, or step 520 and step 540 may be performed simultaneously.

In step 550, the first PUSCH and the second PUSCH are PUSCHs used for retransmission. For example, the access network device may determine, based on a decoding status of uplink data received on the first CG PUSCH, whether to schedule the terminal device for retransmission, and if retransmission is required, dynamically schedule, by using downlink control information (downlink control information, DCI), the terminal device to perform retransmission on the first PUSCH. Herein, the first PUSCH and the first CG PUSCH should correspond to a same process number, that is, the first HARQ process number.

A relationship between the second PUSCH, the second CG PUSCH, and the second HARQ process number is similar, and details are not described herein again.

Based on the foregoing solution, the terminal device or the access network device can determine HARQ process numbers corresponding to different CG PUSCHs, and HARQ process numbers corresponding to CG PUSCHs adjacent in time domain are different, facilitating retransmission scheduling and soft combining.

With reference to FIG. 5 to FIG. 8, the foregoing describes in detail the method provided in embodiments of this application. With reference to FIG. 9 and FIG. 10, the following describes in detail apparatuses provided in embodiments of this application.

FIG. 9 is a block diagram of a communication apparatus according to an embodiment of this application. As shown in FIG. 9, the communication apparatus 900 may include a processing module 910 and an interface module 920. The communication apparatus 900 may be configured to perform the steps performed by the access network device or the steps performed by the terminal device in the foregoing communication method 500.

For example, when the apparatus 900 is configured to implement the functions of the terminal device in the method provided in embodiments of this application, the processing module 910 may be configured to: obtain a first HARQ process number corresponding to a first CG PUSCH, and determine, based on the first HARQ process number, a second HARQ process number corresponding to a second CG PUSCH; and the interface module 920 is configured to send data to the access network device on a first PUSCH corresponding to the first HARQ process number and a second PUSCH corresponding to the second HARQ process number.

When the apparatus 900 is configured to implement the functions of the access network device in the method provided in embodiments of this application, the processing module 910 may be configured to: obtain a first HARQ process number corresponding to a first CG PUSCH, and determine, based on the first HARQ process number, a second HARQ process number corresponding to a second CG PUSCH; and the interface module 920 is configured to receive data from the terminal device on a first PUSCH corresponding to the first HARQ process number and a second PUSCH corresponding to the second HARQ process number.

It should be understood that division into modules in embodiments of this application is an example, and is merely logical function division. During actual implementation, there may be another division manner. In addition, the functional modules in embodiments of this application may be integrated into one processor or may separately exist physically, or two or more modules may be integrated into one module. The integrated module may be implemented in a form of hardware, or may be implemented in a form of a software functional module.

FIG. 10 is another block diagram of a communication apparatus according to an embodiment of this application. As shown in FIG. 10, the communication apparatus 1000 may include at least one processor 1010, configured to implement the functions of the access network device or the functions of the terminal device in the method provided in embodiments of this application.

The communication apparatus 1000 may further include at least one memory 1020, configured to store program instructions and/or data. The memory 1020 is coupled to the processor 1010. The coupling in this embodiment of this application may be an indirect coupling or a communication connection between apparatuses, units, or modules in an electrical form, a mechanical form, or another form, and is used for information exchange between the apparatuses, the units, or the modules. The processor 1010 and the memory 1020 may operate cooperatively. The processor 1010 may execute the program instructions stored in the memory 1020. At least one of the at least one memory may be included in the processor.

The communication apparatus 1000 may further include a communication interface 1030, configured to communicate with another device through a transmission medium, so that the communication apparatus 1000 may communicate with the another device. For example, when the communication apparatus 1000 is configured to implement the functions of the access network device in the method provided in embodiments of this application, the another device may include the terminal device; and when the communication apparatus 1000 is configured to implement the functions of the terminal device in the method provided in embodiments of this application, the another device may include the access network device. The communication interface 1030 may be, for example, a transceiver, an interface, a bus, a circuit, or an apparatus that can implement a transceiving function. The processor 1010 may send and receive data and/or information by using the communication interface 1030, and is configured to implement the method performed by the access network device or the terminal device in the embodiment corresponding to FIG. 5.

For example, when the apparatus 1000 is configured to implement the functions of the terminal device in the method provided in embodiments of this application, the processor 1010 may be configured to: obtain a first HARQ process number corresponding to a first CG PUSCH, and determine, based on the first HARQ process number, a second HARQ process number corresponding to a second CG PUSCH; and is further configured to control the communication interface 1030 to send data to the access network device on a first PUSCH corresponding to the first HARQ process number and a second PUSCH corresponding to the second HARQ process number.

For another example, when the apparatus 1000 is configured to implement the functions of the radio access network device in the method provided in embodiments of this application, the processor 1010 may be configured to: obtain a first HARQ process number corresponding to a first CG PUSCH, and determine, based on the first HARQ process number, a second HARQ process number corresponding to a second CG PUSCH; and is further configured to control the communication interface 1030 to receive, on a first PUSCH corresponding to the first HARQ process number and a second PUSCH corresponding to the second HARQ process number, data sent by the terminal device.

A specific connection medium between the processor 1010, the memory 1020, and the communication interface 1030 is not limited in this embodiment of this application. In this embodiment of this application, in FIG. 10, the processor 1010, the memory 1020, and the communication interface 1030 are connected by using a bus 1040. The bus 1040 is represented by a thick line in FIG. 10. A manner of connection between other components is merely a schematic illustration and is not intended for limitation. The bus may be classified into an address bus, a data bus, a control bus, and the like. For ease of representation, only one thick line is used for representation in FIG. 10, but this does not mean that there is only one bus or only one type of bus.

This application further provides a chip system. The chip system includes at least one processor, configured to implement the functions in the method performed by the terminal device or the access network device in the embodiment shown in FIG. 5, for example, receiving or processing data and/or information in the foregoing method.

In a possible design, the chip system further includes a memory. The memory is configured to store program instructions and data. The memory is located inside or outside the processor.

The chip system may include a chip, or may include a chip and another discrete component.

This application further provides a communication system, including the foregoing terminal device and access network device.

This application further provides a computer-readable storage medium. The computer storage medium stores a computer program (which may also be referred to as code or instructions). When the computer program is run by a processor, the method performed by the terminal device or the access network device in the embodiment shown in FIG. 5 is performed.

This application further provides a computer program product. The computer program product includes a computer program (which may also be referred to as code or instructions). When the computer program is run, a computer is enabled to perform the method performed by the terminal device or the access network device in the embodiment shown in FIG. 5.

It should be noted that, the foregoing method embodiments may be applied to a processor, or implemented by a processor. The processor may be an integrated circuit chip and has a signal processing capability. In an implementation process, the steps in the foregoing method embodiments may be implemented by using a hardware integrated logic circuit in the processor, or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor, or the like.

The steps in the methods disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and completes the steps in the foregoing methods in combination with the hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and the random access memory is used as an external cache. Through illustrative but not restrictive descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the systems and methods described in this specification intends to include but is not limited to these memories and any memory of another proper type.

All or some of the methods provided in the foregoing embodiments may be implemented by using software, hardware, firmware, or any combination thereof. When software is used to implement the methods, all or some of the methods may be implemented in a form of a computer program product. The computer program product may include one or more computer instructions. When the computer program instruction is loaded and executed on a computer, all or some of the procedures or functions according to embodiments of this application are generated. The computer may be a general-purpose computer, a dedicated computer, a computer network, or another programmable apparatus. The computer instruction may be stored in a computer-readable storage medium or be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the systems, apparatuses, and units described above, refer to a corresponding process in the foregoing method embodiments. Details are not described herein again.

It should be understood that the systems, apparatuses, and methods disclosed in the several embodiments provided in this application may be implemented in other manners. For example, the apparatus embodiments described above are merely examples. For example, the division into the units is merely logical function division. During actual implementation, there may be another division manner. For example, a plurality of units or components may be combined or integrated into another system, or some features may be ignored or may not be performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and the parts displayed as units may or may not be physical units, may be located in one position, or may be distributed on a plurality of network units. Some or all of the units may be selected based on actual requirements to achieve the objectives of the solutions in embodiments.

In addition, the functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   obtaining a first hybrid automatic repeat request HARQ process number corresponding to a first configured grant CG physical uplink shared channel PUSCH;
   determining, based on the first HARQ process number, a second HARQ process number corresponding to a second CG PUSCH; and
   transmitting data on a first PUSCH corresponding to the first HARQ process number and a second PUSCH corresponding to the second HARQ process number.

2. The method according to claim 1, wherein the first CG PUSCH and the second CG PUSCH are in a same CG period.

3. The method according to claim 2, wherein the first CG PUSCH is a $1^{st}$ PUSCH in PUSCHs in the CG period.

4. The method according to claim 1, wherein the first CG PUSCH and the second CG PUSCH are in different CG periods of a first CG.

5. The method according to claim 4, wherein the first CG PUSCH is a $1^{st}$ PUSCH of the first CG.

6. The method according to claim 1, wherein the first CG PUSCH is in a CG period of a second CG, and the second CG PUSCH is in a CG period of a third CG.

7. The method according to any one of claims 1 to 6, wherein an offset value between the second HARQ process number and the first HARQ process number is predefined.

8. The method according to any one of claims 1 to 6, wherein an offset value between the second HARQ process number and the first HARQ process number is configured by an access network device.

9. The method according to any one of claims 1 to 8, wherein the second HARQ process number X2 and the first HARQ process number X1 satisfy:

$$X2 = (X1 + (L2 - L1) \times M) \bmod N,$$

   wherein
   L2 represents an index of the second CG PUSCH, L1 represents an index of the first CG PUSCH, M represents a non-zero integer, and N represents a quantity of HARQ processes.

10. The method according to any one of claims 1 to 8, wherein the second HARQ process number X2 and the first HARQ process number X1 satisfy:

$$X2 = (X1 + (L2 - L1) \times M) \bmod N + O,$$

   wherein
   L2 represents an index of the second CG PUSCH, L1 represents an index of the first CG PUSCH, M represents a non-zero integer, N represents a quantity of HARQ processes, and O represents an integer greater than or equal to 0.

11. A communication apparatus, comprising a processing module and an interface module, wherein

the processing module is configured to obtain a first HARQ process number corresponding to a first CG PUSCH, and is further configured to determine, based on the first HARQ process number, a second HARQ process number corresponding to a second CG PUSCH; and
the interface module is configured to transmit data on a first PUSCH corresponding to the first HARQ process number and a second PUSCH corresponding to the second HARQ process number.

12. The apparatus according to claim 11, wherein the first CG PUSCH and the second CG PUSCH are in a same CG period.

13. The apparatus according to claim 12, wherein the first CG PUSCH is a 1st PUSCH in PUSCHs in the CG period.

14. The apparatus according to claim 11, wherein the first CG PUSCH and the second CG PUSCH are in different CG periods of a first CG.

15. The apparatus according to claim 14, wherein the first CG PUSCH is a 1st PUSCH of the first CG.

16. The apparatus according to claim 11, wherein the first CG PUSCH is in a CG period of a second CG, and the second CG PUSCH is in a CG period of a third CG.

17. The apparatus according to any one of claims 11 to 16, wherein an offset value between the second HARQ process number and the first HARQ process number is predefined.

18. The apparatus according to any one of claims 11 to 16, wherein an offset value between the second HARQ process number and the first HARQ process number is configured by an access network device.

19. The apparatus according to any one of claims 11 to 18, wherein the second HARQ process number X2 and the first HARQ process number X1 satisfy:

$$X2 = (X1 + (L2 - L1) \times M) \bmod N,$$

wherein
L2 represents an index of the second CG PUSCH, L1 represents an index of the first CG PUSCH, M represents a non-zero integer, and N represents a quantity of HARQ processes.

20. The apparatus according to any one of claims 11 to 18, wherein the second HARQ process number X2 and the first HARQ process number X1 satisfy:

$$X2 = (X1 + (L2 - L1) \times M) \bmod N + O,$$

wherein
L2 represents an index of the second CG PUSCH, L1 represents an index of the first CG PUSCH, M represents a non-zero integer, N represents a quantity of HARQ processes, and O represents an integer greater than or equal to 0.

21. A communication apparatus, comprising a processor, wherein
the processor is coupled to a memory, the memory is configured to store instructions, and when the instructions are executed by the processor, the apparatus is enabled to perform the method according to any one of claims 1 to 10.

22. A computer-readable storage medium, wherein the computer-readable storage medium stores a computer program, and when the computer program is executed, the method according to any one of claims 1 to 10 is performed.

23. A computer program product, comprising a computer program, wherein when the computer program is run, the method according to any one of claims 1 to 10 is performed.

24. A communication apparatus, comprising a module configured to perform the method according to any one of claims 1 to 10.

25. A chip system, comprising at least one processor, configured to support the chip system in performing the method according to any one of claims 1 to 10.

26. A communication system, comprising a terminal device configured to perform the method according to any one of claims 1 to 10, and an access network device configured to perform the method according to any one of claims 1 to 10.

FIG. 1

FIG. 2

Slot number of a slot in
which the PUSCH is located
in a system frame to which
the PUSCH belongs

| SFN=8 | SFN=9 | SFN=10 |

Quantity of slots in each
frame

PUSCH

Quantity of symbols in each
slot

Symbol number of a start
symbol of the PUSCH in the
slot to which the PUSCH
belongs

FIG. 3

CG period     CG period     CG period

PUSCH

...

Time
domain

FIG. 4

<u>500</u>

| Terminal device | | Access network device |
|---|---|---|
| 510: Obtain a first HARQ process number corresponding to a first CG PUSCH | | 530: Obtain a first HARQ process number corresponding to a first CG PUSCH |
| 520: Determine, based on the first HARQ process number, a second HARQ process number corresponding to a second CG PUSCH | | 540: Determine, based on the first HARQ process number, a second HARQ process number corresponding to a second CG PUSCH |

550: Transmit data on a first PUSCH corresponding to the first HARQ process number and a second PUSCH corresponding to the second HARQ process number

FIG. 5

FIG. 6

FIG. 7

CG period      CG period      CG period

Second CG

...

Time
domain

↑
First CG PUSCH

CG period      CG period

Third CG

...

Time
domain

↑
Second CG PUSCH

FIG. 8

Communication
apparatus 900

Processing module
910

Interface module 920

FIG. 9

Communication apparatus 1000

Processor
1010

1040

Memory
1020

Communication
interface
1030

FIG. 10

## INTERNATIONAL SEARCH REPORT

| International application No. |
| --- |
| **PCT/CN2023/137427** |

| A. | CLASSIFICATION OF SUBJECT MATTER |
| --- | --- |

H04L 1/1806(2023.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXTC, WPABSC, DWPI, CNKI, 3GPP: 配置授权, 物理上行共享信道, 混合自动重传请求, 进程, 过程, 号, 序号, 标识, 数, configured grant, CG, physical uplink share channel, PUSCH, hybrid automatic repeat request, HARQ, process, number, HPN, identity, ID

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021163967 A1 (GUANGDONG OPPO MOBILE TELECOMMUNICATIONS CORP., LTD.) 26 August 2021 (2021-08-26)<br>description, page 2, line 33 to page 16, line 10 | 1-26 |
| X | US 2022386329 A1 (FG INNOVATION COMPANY LIMITED) 01 December 2022 (2022-12-01)<br>claims 1 and 5-9, and description, paragraphs [0032]-[0099] | 1-26 |
| A | CN 115486002 A (QUALCOMM INC.) 16 December 2022 (2022-12-16)<br>entire document | 1-26 |
| A | CN 113676286 A (SPREADTRUM COMMUNICATIONS (SHANGHAI) CO., LTD.) 19 November 2021 (2021-11-19)<br>entire document | 1-26 |
| A | LENOVO et al. "HARQ process configuration for configured grants"<br>*3GPP TSG-RAN WG2 Meeting #109e R2-2000821*, 06 March 2020 (2020-03-06),<br>entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 February 2024** | **18 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/137427** |

| Patent document cited in search report | | | Publication date (day/month/year) | Patent family member(s) | | | Publication date (day/month/year) |
| --- | --- | --- | --- | --- | --- | --- | --- |
| WO | 2021163967 | A1 | 26 August 2021 | CN | 114731663 | A | 08 July 2022 |
| US | 2022386329 | A1 | 01 December 2022 | EP | 4014394 | A1 | 22 June 2022 |
| | | | | WO | 2021027917 | A1 | 18 February 2021 |
| | | | | CN | 114208081 | A | 18 March 2022 |
| CN | 115486002 | A | 16 December 2022 | WO | 2021212311 | A1 | 28 October 2021 |
| | | | | EP | 4140073 | A1 | 01 March 2023 |
| | | | | US | 2023114310 | A1 | 13 April 2023 |
| | | | | IN | 202227044692 | A | 14 October 2022 |
| CN | 113676286 | A | 19 November 2021 | | None | | |

Form PCT/ISA/210 (patent family annex) (July 2022)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211718686